# EUROPÄISCHE PATENTSCHRIFT

(11) **EP 1 051 279 B1**
(45) Veröffentlichungstag und Bekanntmachung des Hinweises auf die Patenterteilung: **26.11.2003**
(21) Anmeldenummer: 99908812.3
(22) Anmeldetag: 21.01.1999
(51) Int. Cl.: B23K 1/00, B23K 3/06, F01N 3/28

(54) **VERFAHREN ZUM BELOTEN EINER ANORDNUNG**
METHOD FOR INTRODUCING SOLDER INTO A SYSTEM
PROCEDE POUR APPLIQUER DE LA BRASURE SUR UN ASSEMBLAGE

(30) Priorität: 27.01.1998 DE 19803012; 22.05.1998 DE 19823000
(43) Veröffentlichungstag der Anmeldung: 15.11.2000
(73) Patentinhaber: Emitec Gesellschaft für Emissionstechnologie mbH, 53797 Lohmar (DE)
(72) Erfinder: WIERES, Ludwig, D-51491 Overath (DE); KURTH, Ferdi, D-50939 Köln (DE)
(74) Vertreter: Kahlhöfer, Hermann, Dipl.-Phys.
(86) Internationale Anmeldenummer: EP9900391
(87) Internationale Veröffentlichungsnummer: WO99037433

(56) Entgegenhaltungen:
- EP-A- 0 474 909
- DE-A- 2 924 592
- US-A- 3 769 101
- US-A- 5 593 646
- PATENT ABSTRACTS OF JAPAN vol. 016, no. 331 (M-1282), 20. Juli 1992 & JP 04 094868 A (NIPPON STEEL CORP), 26. März 1992

## Beschreibung

Die vorliegende Erfindung betrifft ein Verfahren zum Beloten einer Anordnung, die einen in einem Mantelrohr angeordneten Wabenkörper enthält.

Wabenkörper, die durch Stapeln und/oder Wickeln von Blechlagen, von denen zumindest ein Teil strukturierte Blechlagen sind, sind in vielfältigen Formen bekannt. Solche Wabenkörper werden beispielsweise als Trägerkörper für katalytisch wirkende Beschichtungen verwendet. Derartig beschichtete Wabenkörper werden beispielsweise als Katalysator-Trägerkörper eingesetzt. Insbesondere für Verbrennungskraftmaschinen, wie sie beispielsweise bei Kraftfahrzeugen verwendet werden, bilden die Wabenkörper mit dem Mantelrohr ein Teil eines Abgassystems. Unterschiedliche Ausgestaltungen einer Anordnung als Katalysator-Trägerkörper sind beispielsweise in der EP-A1-0 245 738 beschrieben.

Die gestapelten und/oder gewickelten Blechlagen werden untereinander wenigstens teilweise verlötet, so daß ein monolithischer Wabenkörper entsteht. Es ist bekannt, daß der Wabenkörper wenigstens teilweise mit einem Mantelrohr, in dem er angeordnet ist, verlötet wird. Hierzu wird Lot in die Lötbereiche der Blechlagen und des Mantelrohres eingebracht.

Verfahren zum Aufbringen eines Haftmittels und Beloten einer metallischen Anordnung enthaltend einen Wabenkörper und ein Mantelrohr sind beispielsweise durch die WO 89/11938, WO 94/06594, WO 93/25339 und die DE-29 24 592 A1 bekannt.

Aus dem Stand der Technik ist bekannt, daß der Wabenkörper wenigstens teilweise mit einem Haftmittel versehen wird, an dem ein Lotpulver haftet. Die aus dem Stand der Technik bekannten Verfahren unterscheiden sich hinsichtlich der Verfahrensführung durch die Abfolge der Aufbringung eines Haftmittels und eines Lotpulvers während oder nach der Ausbildung des Wabenkörpers. Eine ausführliche Darstellung des Standes der Technik enthält die WO 89/11938.

Durch die EP 0 474 909 A1 ist ein Verfahren zum Beloten einer Anordnung bekannt, bei der ein Wabenkörper mit einer Stirnseite in Kontakt mit einem Haftmittelträger gebracht wird. Das Haftmittel soll aufgrund von Kapilarwirkung in die Kanäle gesaugt werden. Die DE 29 24 592 A1 offenbart ein Verfahren zur Verbindung eines Wabenkörpers mit dem Mantelrohr, bei dem der Wabenkörper mit dem Mantelrohr in ein Tauchbad, enthaltend eine Haftflüssigkeit, eingetaucht und anschließend mit pulverförmigem Lot versehen werden.

Der vorliegenden Erfindung liegt die Zielsetzung zugrunde, ein Verfahren zum Beloten einer Anordnung anzugeben, welche eine gleichmäßige Einbringung eines Haftmittels in den Wabenkörper ermöglicht.

Zur Lösung dieser Aufgabe wird ein Verfahren mit den Merkmalen des Anspruchs 1 vorgeschlagen. Vorteilhafte Ausgestaltungen und Weiterbildungen des erfindungsgemäßen Verfahrens sind Gegenstand der abhängigen Ansprüche.

Zur Belotung einer Anordnung, die einen in einem Mantelrohr angeordneten Wabenkörper umfaßt, wird vorgeschlagen, daß zunächst ein Wabenkörper durch Stapeln oder Wickeln von Blechlagen, von denen zumindest ein Teil strukturierte Blechlagen sind, so ausgebildet wird, daß dieser für ein Fluid durchströmbare Kanäle aufweist. Der Wabenkörper wird teilweise in ein Mantelrohr eingebracht. Der vorstehende Abschnitt des Wabenkörpers wird stirnseitig mit einer ein Haftmittel enthaltenden Walze, die um eine Walzenachse drehbar ist, in Kontakt gebracht. Der Wabenkörper und die Walze werden so relativ zueinander bewegt, daß die Walze auf wenigstens einem Teil der Stirnfläche des vorstehenden Abschitts des Wabenkörpers rollt und während des Rollvorgangs ein Haftmittel an den Wabenkörper abgibt. Danach wird der Wabenkörper in das Mantelrohr eingebracht und ein Lot wenigstens in den Wabenkörper eingebracht.

Durch die erfindungsgemäße Verfahrensführung wird eine gleichmäßige Aufbringung eines Haftmittels auf bzw. in den Wabenkörper erreicht. Mögliche Unebenheiten in der Stirnfläche des Wabenkörpers, die aus einem Versatz zwischen Blechlagen des Wabenkörpers herrühren, beeinträchtigen die Aufbringung des Haftmittels nicht. Dadurch, daß die Walze auf der Stirnfläche rollt, wird auch der Verschleiß der Walze verringert, da nicht stets diegleichen Stellen der Walze in Kontakt mit den relativ dünnen Rändern der Blechlagen kommen. Hierdurch wird auch die Lebensdauer einer Einrichtung, die zur Durchführung des Verfahrens geeignet ist, verlängert.

Zum Aufbringen des Haftmittels kann der Wabenkörper und die Walze bewegt werden. Hierdurch wird ein schnelles Auftragen eines Haftmittels erreicht, wenn die Walze und der Wabenkörper translatorisch in entgegengesetzer Richtung bewegt werden. Zur Vereinfachung des Verfahrens wird vorgeschlagen, daß entweder der Wabenkörper oder die Walze ortsfest positioniert ist und die Walze bzw. der Wabenkörper bewegt werden.

Bei einem Wabenkörper, der wenigstens einen aus dem Mantelrohr vorstehenden bezüglich einer Längsachse des Wabenkörpers rotationssymmetrisch ausgebildeten Endbereich aufweist, wird vorgeschlagen, daß der Wabenkörper um seine Längsachse und die Walze, die eine an den Endbereich angepaßte Gestalt aufweist und sich radial einwärts lediglich bis zur Längsachse erstreckt, um eine die Längsachse unter einem Winkel von ca. 90° schneidende Walzenachse verdreht werden. Durch diese Verfahrensführung wird die Walze mit der Fläche des vorstehenden Endbereichs in Kontakt gebracht.

Ein Wabenkörper kann mit seiner Stirnfläche mehrmals in Kontakt mit der Walze gebracht werden. Es ist zweckmäßig, wenn der Wabenkörper vor einem erneuten In-Kontakt-Bringen mit der Walze um einen vorgegebenen Winkel um die Längsachse verschwenkt wird. Hierdurch überstreicht die Walze die Stirnfläche des Wabenkörpers mehrmals, so daß eine sehr gleichmäßige Auftragung eines Haftmittels erzielt wird.

Für bestimmte Anwendungsfälle ist es nicht notwendig, daß sämtliche Blechlagen des Wabenkörpers mit einem Haftmittel versehen werden. Um ein Haftmittel. lediglich bereichsweise auf die Stirnfläche des Wabenkörpers aufzubringen, wird vorgeschlagen, daß die Walze lediglich bereichsweise das Haftmittel aufweist. Dies kann beispielsweise durch entsprechende Ausgestaltung der Walze erfolgen. Durch diese Verfahrensführung ist eine Zwischenschaltung von beispielsweise Beleimungsmasken nicht notwendig.

Nach einer weiteren vorteilhaften Ausbildung des erfindungsgemäßen Verfahrens wird vorgeschlagen, daß der Wabenkörper im wesentlichen vertikal angeordnet und die Walze mit einer oberen Stirnfläche des Wabenkörpers in Kontakt gebracht wird. Durch die Relativbewegung zwischen dem Wabenkörper und der Walze wird erreicht, daß ein Hineintropfen des Haftmittels in den Wabenkörper nicht eintritt.

Insbesondere bei der Verwendung niedrigviskoser Haftmittel ist es zweckmäßig, den Wabenkörper im wesentlichen vertikal anzuordnen und die Walze mit einer unteren Stirnfläche des Wabenkörpers in Kontakt zu bringen, wodurch ein Hineintropfen des Haftmittels in den Wabenkörper vermieden wird.

Die Anordnung, die einen in einem Mantelrohr angeordneten Wabenkörper umfaßt, kann auch so ausgebildet sein, daß das Mantelrohr wenigstens in einem Randabschnitt über den Wabenkörper vorsteht. Mit anderen Worten, der Wabenkörper ist in dem Mantelrohr so angeordnet, daß wenigstens eine Stirnfläche des Wabenkörpers mit Abstand zur benachbarten Stirnfläche des Mantelrohres liegt.

Solche vorstehenden Randabschnitte des Mantelrohres bilden Verbindungsbereiche, so daß die Anordnung mit weiteren Bauteilen oder Elementen verbindbar ist. So kann beispielsweise bei der Verwendung einer solchen Anordnung in einem Abgassystem an dem einen Verbindungsbereich des Mantelrohres ein Diffusor vorgesehen sein, der beispielsweise mit einer Abgasleitung eines Abgassystems einer Verbrennungskraftmaschine verbunden ist. Es ist auch bekannt, daß das Mantelrohr zwei Verbindungsbereiche aufweist, die an dem jeweiligen Ende des Mantelrohres ausgebildet sind, wobei in diesen Verbindungsbereichen im wesentlichen kein Wabenkörper liegt.

Wird beispielsweise das aus der DE-29 24 592 A1 bekannte Verfahren zur Verbindung des Wabenkörpers mit dem Mantelrohr angewandt, bei dem der Wabenkörper mit dem Mantelrohr in ein Tauchbad enthaltend eine Haftflüssigkeit eingetaucht und anschließend mit pulverförmigen Lot versehen, so werden auch die Verbindungsbereiche des Mantelrohres belotet, ohne daß dies notwendig oder gewünscht ist. Die Verbindungsbereiche werden nicht nur auf einer Innenfläche des Mantelrohres sondern auch auf einer Außenfläche des Mantelrohres mit dem Haftmittel versehen. Dies ist unerwünscht, da es hierdurch zu einer Verschleppung des Haftmittels kommt. Insbesondere werden auch die Handhabungsgeräte, die an einer Außenfläche des Mantelrohres greifen, mit dem Haftmittel in Kontakt gebracht. Ein erheblicher Reinigungsaufwand des Handhabungsgerätes ist gegebenenfalls notwendig.

Die weiteren in der DE-29 24 592 A1 beschriebenen Verfahren sind grundsätzlich dazu geeignet, eine Belotung eines Mantelrohres und eines Wabenkörpers zu erreichen, wobei diese Belotungsverfahren relativ aufwendig sind.

Zur Belotung einer Anordnung, welche einen Wabenkörper und ein Mantelrohr umfaßt, wird in einer weiteren vorteilhaften Ausgestaltung des Verfahrens vorgeschlagen, daß zunächst ein Wabenkörper durch Stapeln und/oder Wickeln von Blechlagen, von denen zumindest ein Teil strukturierte Blechlagen sind, so ausgebildet wird, daß dieser für ein Fluid durchströmbare Kanäle aufweist. Der Wabenkörper wird teilweise in ein Mantelrohr eingebracht. Der aus dem Mantelrohr vorstehende Abschnitt des Wabenkörpers wird stirnseitig in Kontakt mit der ein Haftmittel enthaltenden Walze gebracht. Danach wird der Wabenkörper in das Mantelrohr eingebracht und ein Lot in den Wabenkörper eingebracht.

Dadurch, daß lediglich der aus dem Mantelrohr vorstehende Abschnitt des Wabenkörpers mit einem Haftmittel in Kontakt gebracht wird, wird vermieden, daß auch das Mantelrohr mit dem Haftmittel in Kontakt kommt. Hierdurch wird erreicht, daß das Mantelrohr haftmittelfrei ist, wodurch das Lotpulver nicht am Mantelrohr anhaftet.

Dadurch, daß das Mantelrohr nicht mit einem Haftmittel versehen wird, ist es auch nicht notwendig, dieses Mantelrohr gegebenenfalls vom Haftmittel zu befreien, um eine Verschleppung des Haftmittels zu vermeiden.

Dadurch, daß der aus dem Mantelrohr vorstehende Abschnitt mit einem Haftmittel in Kontakt gebracht wird, wodurch der Wabenkörper wenigstens teilweise in seiner axialen Richtung mit dem Haftmittel versehen wird, wird auch erreicht, daß der Wabenkörper über seine gesamte Querschnittsfläche mit dem Haftmittel versehen wird, so daß auch Randbereiche des Wabenkörpers einwandfrei mit einem Lotpulver versehen werden können. Hierdurch wird gewährleistet, daß auch im Randbereich des Wabenkörpers bzw. zwischen dem Wabenkörper und dem Mantelrohr eine zuverlässige Lötverbindung ausgebildet werden kann.

Nach einer weiteren vorteilhaften Ausgestaltung des Verfahrens wird vorgeschlagen, daß vor dem Einbringen des Lotes ein dem Abschnitt gegenüberliegender Abschnitt des Wabenkörpers mit einem Haftmittel in Kontakt gebracht wird insbesondere bei einer Anordnung, die ein Mantelrohr aufweist, wobei das Mantelrohr an den gegenüberliegenden Endabschnitten jeweils einen Verbindungsbereich aufweist, wird vorgeschlagen, daß der Wabenkörper durch das Mantelrohr hindurchgeschoben wird, so daß ein Abschnitt aus dem Mantelrohr vorsteht. Dieser Abschnitt wird mit dem Haftmittel in Kontakt gebracht. Danach wird der Wabenkörper so in das Mantelrohr eingebracht, daß der Wabenkörper im wesentlichen nicht in den Verbindungsbereichen des Mantelrohres liegt.

Für eine stabile Handhabung der Anordnung wird vorgeschlagen, daß der Wabenkörper so in das Mantelrohr eingebracht wird, daß dieser während der eine oder der andere Abschnitt mit dem Haftmittel in Kontakt gebracht wird, sich über einen wesentlichen Teil seiner axialen Länge im Mantelrohr befindet. Hierdurch weist die Anordnung einen günstig gelegenen Schwerpunkt auf, der ein Umkippen der Anordnung verhindert.

Insbesondere wird vorgeschlagen, daß der Wabenkörper so in das Mantelrohr eingebracht wird, daß dieser wenigstens 1 mm, vorzugsweise 5 mm, aus dem Mantelrohr vorsteht. Diese Erstreckung ist ausreichend um zu verhindern, daß auch das Mantelrohr mit dem Haftmittel in Kontakt kommt.

Der Wabenkörper und das Mantelrohr weisen ein unterschiedliches thermisches Dehnungsverhalten auf. Es wird daher angestrebt, daß eine starre Verbindung zwischen dem Wabenkörper und dem Mantelrohr in den jeweiligen Endbereichen des Wabenkörpers vermieden wird. Liegen keine starren Verbindungen in den jeweiligen Endbereichen des Wabenkörpers mit dem Mantelrohr vor, so werden thermische Spannungen zwischen dem Mantelrohr und dem Wabenkörper vermieden. Durch die WO 96/26805 ist bereits bekannt, wie derartige thermische Spannungen durch geeignete Verlötung des Wabenkörpers mit dem Mantelrohr vermieden werden können.

Nach einer vorteilhaften Ausgestaltung des erfindungsgemäßen Verfahrens werden thermische Spannungen zwischen Wabenkörper und Mantelrohr dadurch vermieden, daß in das Mantelrohr ein buchsenförmiges Element eingebracht wird, das einen Außenmantel aufweist, der im wesentlichen zur Anlage an ein Teil der Innenmantelfläche des Mantelrohres kommt, und in das der Wabenkörper angeordnet wird. Durch dieses buchsenförmige Element wird ein Verlöten des Wabenkörpers mit dem Mantelrohr verhindert. Das buchsenförmige Element erstreckt sich dabei lediglich über einen Teil der axialen Erstreckung des Mantelrohres und des Wabenkörpers. Das buchsenförmige Element ist vorzugsweise durch eine Folie gebildet.

Fertigungstechnisch bedingt weist ein Mantelrohr eine gewisse Unrundheit auf. Es bestehen auch Toleranzen hinsichtlich der Schwankungen eines Innendurchmessers des Mantelrohres. Hierdurch bildet sich zwischen der Innenmantelfläche des Mantelrohres und dem Element ein Spalt. Dadurch, daß der Wabenkörper aus dem Mantelrohr vorstehend mit einem Haftmittel in Kontakt gebracht wird, wird verhindert, daß das Haftmittel in den Spalt zwischen das Element und das Mantelrohr gelangt, so daß auch dieser Spalt nach einer Aufbringung eines Lotes im wesentlichen lotfrei bleibt. Hierdurch wird auch erreicht, daß zwischen dem Mantelrohr und dem buchsenförmigen Element keine Lötverbindung entsteht. Andererseits wird erreicht, daß der Wabenkörper bis zum buchsenförmigen Element hin und auch mit dem buchsenförmigen Element verlötet werden kann.

Vorzugsweise wird das buchsenförmige Element mit dem Mantelrohr verbunden, so daß beim Einbringen des Wabenkörpers in das Mantelrohr das buchsenförmige Element eine vorgegebene Stellung beibehält, obwohl der Wabenkörper, der in axialer Richtung des Mantelrohres und somit auch des buchsenförmigen Elementes gedrückt wird und hierdurch eine Kraft auf das buchsenförmige Element in Einführrichtung des Wabenkörpers ausübt. Insbesondere wird vorgeschlagen, daß das Element mit dem Mantelrohr stofflich verbunden wird. Hierbei kann es sich beispielsweise um eine Schweißverbindung handeln. Alternativ oder zusätzlich kann das Element mit dem Mantelrohr verklebt sein. Die Verbindung zwischen dem buchsenförmigen Element und dem Mantelrohr ist vorzugsweise so ausgestaltet, daß die Festigkeit der Verbindung kleiner ist als die Festigkeit einer Verbindung zwischen dem Element und dem Wabenkörper. Insbesondere bei einer Klebeverbindung zwischen dem Element und dem Mantelrohr kann diese bereits während eines Lötprozesses aufgrund der beim Lötprozeß vorherrschenden Temperaturen aufgehoben werden. Dadurch, daß die Verbindung zwischen dem Element und dem Mantelrohr eine geringere Festigkeit aufweist als die Verbindung zwischen dem Element und dem Wabenkörper wird auch sichergestellt, daß thermische Spannungen zwischen dem Mantelrohr und dem Wabenkörper nicht über das Element in den Wabenkörper eingeleitet werden. Vorzugsweise ist das Element aus dem gleichen Werkstoff hergestellt, wie der Wabenkörper bzw. das Mantelrohr. Die Verbindung zwischen dem Element und dem Mantelrohr ist im wesentlichen eine Montageverbindung, durch die sichergestellt werden soll, daß das Element während der Montage, d.h. während des Einbringens des Wabenkörpers in das Mantelrohr, seine Lage nicht verändert.

Um den Wabenkörper in einem axialen Teilbereich des Mantelrohres und mit dem buchsenförmigen Element zu verlöten wird vorgeschlagen, daß wenigstens ein Lotabschnitt ausgebildet wird, der das Mantelrohr und das Element überlappt. Hierbei handelt es sich vorzugsweise um einen in Umfangsrichtung des Mantelrohres betrachtet, geschlossenen Lotabschnitt.

Weitere Einzelheiten und Vorteile des Verfahrens werden anhand der in der Zeichnung dargestellten Verfahrensahschnitte und einer Anordnung erläutert. Es zeigen:
- Fig. 1: im Schnitt eine Anordnung mit einer Walze,
- Fig. 2: eine Anordnung zwischen zwei Walzen,
- Fig. 3: im Schnitt eine Anordnung mit einem aus dem Mantelrohr vorstehenden Endbereich und einer Walze,
- Fig. 4: im Schnitt ein Mantelrohr mit einem Etement und einem Lotabschnitt,
- Fig. 5: eine Anordnung während einer Aufbringung eines Haftmittels,
- Fig. 6: ein Einbringen des Wabenkörpers in das Mantelrohr nach einer Aufbringung eines Haftmittels,
- Fig. 7: ein Aufbringen eines Haftmittels am zweiten Abschnitt des Wabenkörpers,
- Fig. 8: Einbringen eines Lotes in den Wabenkörper,
- Fig. 9: vergrößert einen Randbereich der Anordnung, und
- Fig. 10: eine Auftragstation.

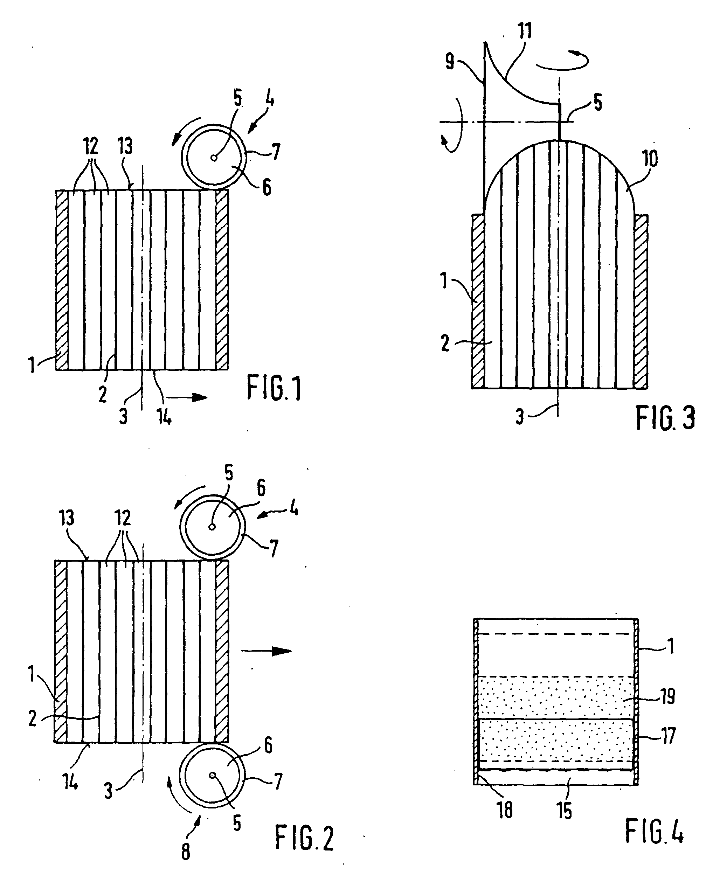

Die Figuren 1 bis 3 zeigen keine Ausführungs beispiele der Erfindung, sie dienen der Erleichterung des Verständnis der Erfindung.

Fig. 1 zeigt im Schnitt ein Mantelrohr 1, in dem ein metallischer Wabenkörper 2, der durch Stapeln und/oder Wickeln von Blechlagen, von denen zumindest ein Teil strukturiert sind, gebildet ist. Der Wabenkörper 2 weist sich in Längsrichtung des Wabenkörpers 2 erstreckende Kanäle 12 auf.

Der Wabenkörper ist im wesentlichen vertikal angeordnet. Er weist zwei gegenüberliegende Stirnflächen 13, 14 auf.

Das Mantelrohr 1 bildet mit dem Wabenkörper 2 eine Anordnung. Oberhalb der Anordnung ist eine Walze 4 angeordnet. Die Walze 4 ist um eine Walzenachse 5 drehbar gelagert. Die Walze 4 weist einen Kern 6 auf, auf dem ein Substrat 7 ausgebildet ist, der ein nicht dargestelltes Haftmittel enthält.

Die Aufbringung des Haftmittels von der Walze 4 in die Stirnfläche 13 des Wabenkörpers 2 erfolgt durch eine Relativbewegung zwischen dem Wabenkörper 2 und der Walze 4.

Der Wabenkörper 2 wird entsprechend dem Pfeil in der Fig. 1 bewegt, wodurch die an der Stirnfläche 13 anliegende Walze 4 in Rotation um ihre Walzenachse 5 versetzt wird. Während dieser Rotation gelangt das Substrat 7 mit dem Haftmittel zur Anlage an die Stirnfläche 13 und das Haftmittel in die Stirnfläche 13 des Wabenkörpers 2 ab.

Die Walze 4 kann auch angetrieben werden. Durch den Anpreßdruck zwischen der Walze 4 und der Anordnung kann die abgegebene Haftmittelmenge gesteuert werden. Dies kann auch durch die Geschwindigkeit der Relativbewegung zwischen dem Wabenkörper 2 und der Walze 4 gesteuert werden.

In der Fig. 2 ist eine Anordnung dargestellt, die der in der Fig. 1 dargestellten Anordnung entspricht. Die Anordnung ist zwischen zwei Walzen 4, 8 bewegbar, so daß die gegenüberliegenden Stirnflächen 13, 14 gleichzeitig mit einem Haftmittel versehen werden. Die Menge des Haftmittels, die die Walzen 4, 8 abgeben, kann gleich oder verschieden sein. Die Walze 4 bzw. 8 kann auch so ausgebildet sein, daß in axialer Richtung der Walze 4 bzw. 8 betrachtet Abschnitte vorhanden sind, die kein Substrat 7 aufweisen, so daß eine streifenförmige Aufbringung eines Haftmittels möglich ist.

In der Fig. 3 ist ein Wabenkörper 2 dargestellt, der in einem Mantelrohr 1 angeordnet ist. Der Wabenkörper 2 weist einen bezüglich der Längsachse 3 im wesentlichen rotationssymmetrisch ausgebildeten Endbereich 10 auf. Die Walze 9 weist eine an den Endbereich 10 angepaßte Kontur 11 auf.

Zum Aufbringen eines Haftmittels liegt die Walze 9 an dem Endbereich 10 an. Die Walze 9 ist dabei so angeordnet, daß sich die Walzenachse 5 und die Längsachse 3 unter einem Winkel von ca. 90° schneiden. Der Wabenkörper 2 mit dem Mantel 1 wird um die Achse 3 verdreht, so daß die Walze 9 zur Anlage an die Fläche des Endbereichs 10 gelangt. Alternativ kann die Anordnung umfassend das Mantelrohr 1 und den Wabenkörper 2 auch ortsfest angeordnet sein. In diesem Fall wird die Walze 9 in eine Rotationsbewegung um die Achse 5 sowie um die Längsachse 3 versetzt. Es ist auch möglich sowohl die Anordnung als auch die Walze zu bewegen.

Fig. 4 zeigt im Schnitt ein Mantelrohr 1. Das Mantelrohr 1 weist vorzugsweise einen im wesentlichen kreisförmigen Querschnitt auf. An einem Endabschnitt des Mantelrohres 1 ist ein Verbindungsbereich 15 ausgebildet. Der Verbindungsbereich 15 ist durch die gestrichelte Linie gekennzeichnet. Dieser Verbindungsbereich 15 ist zur Verbindung der Anordnung mit einer weiteren Komponente, die nicht dargestellt ist, vorgesehen. Insbesondere kann der Verbindungsbereich 15 mit einer Komponente eines Abgassystems einer Verbrennungskraftmaschine verbunden werden.

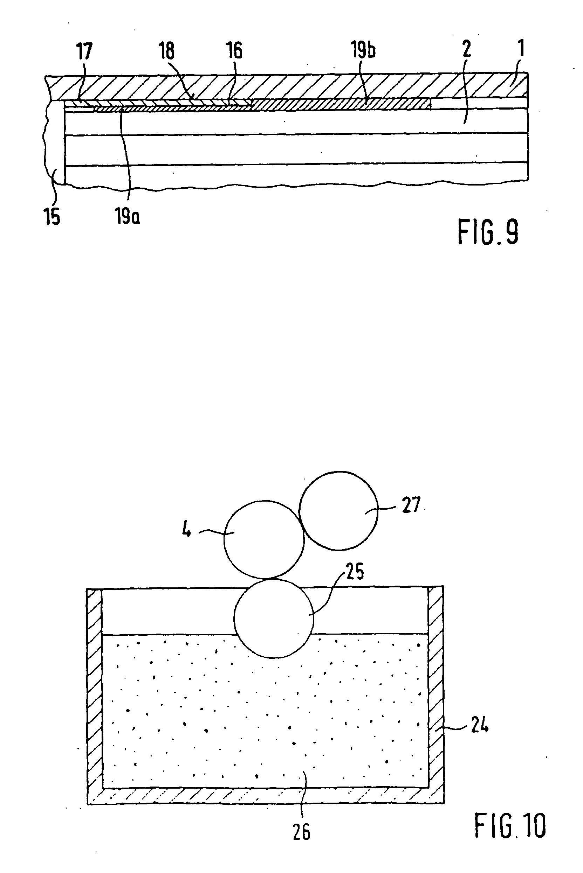

In dem Mantelrohr 1 ist ein buchsenförmiges Element 17 eingebracht. Das buchsenförmige Element 17 weist einen Außenmantel 16 auf, der im wesentlichen zur Anlage an einen Teil der Innenmantelfläche 18 des Mantelrohres 1 kommt, wie dies insbesondere aus der Fig. 9 ersichtlich ist. Das buchsenförmige Element 17 ist vorzugsweise in Umfangsrichtung betrachtet ringförmig ausgebildet. Wie aus der Darstellung nach Fig. 4 und insbesondere nach Fig. 9 ersichtlich ist, erstreckt sich das buchsenförmige Element 17 über einen Teil der axialen Erstreckung des Mantelrohres 1. Die axiale Erstrekung des buchsenförmigen Elementes 17 ist kleiner als die axiale Erstreckung eines Wabenkörpers 2.

Das buchsenförmige Element 17 ist mit dem Mantelrohr 1 verbunden. Mit dem Bezugszeichen 19 ist ein Lotabschnitt bezeichnet, der teilweise das Mantelrohr 1 und das buchsenförmige Element 17 überlappt. Der Lotabschnitt 19 weist einen ersten Abschnitt 19a auf, der im wesentlichen der axialen Erstreckung des Elementes 2 entspricht. An den ersten Abschnitt 19a schließt sich ein zweiter Abschnitt 19b an (Fig. 9).

Durch den ersten Abschnitt 19a des Lotabschnittes 19 findet eine Lotverbindung zwischen dem Wabenkörper 2 und dem Element 17 statt. Durch den zweiten Abschnitt 19b wird der Wabenkörper 2 mit dem Mantelrohr 1 verbunden. Zumindest die axiale Erstreckung des Elementes 17 bildet eine Kompensationsstrecke, durch die unterschiedliche thermische Dehnungen vom Mantelrohr 1 und vom Wabenkörper 2 kompensiert werden können.

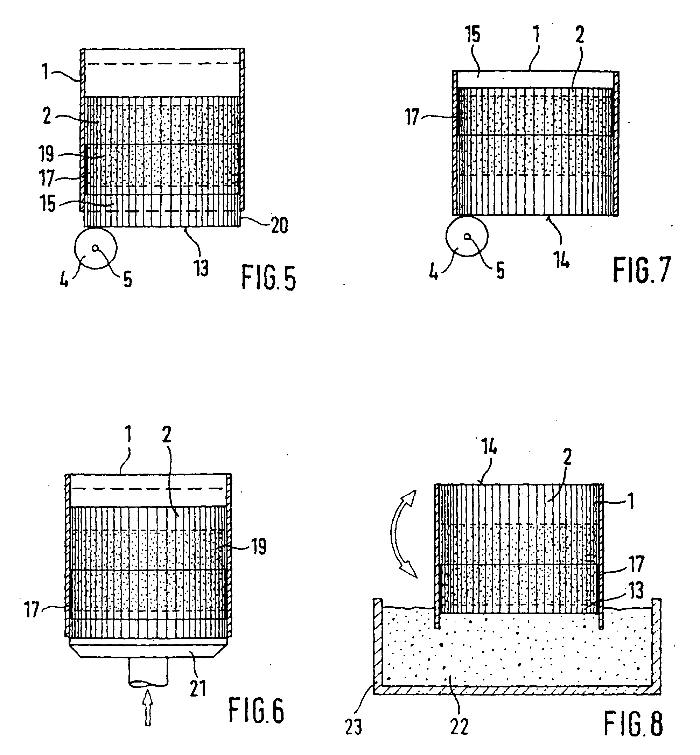

In das Mantelrohr 1 mit dem buchsenförmigen Element 17 wird ein Wabenkörper 2 eingebracht. Der Wabenkörper 2 wird so in das Mantelrohr 1 eingebracht, daß ein Abschnitt 20 aus dem Mantelrohr 1 vorsteht, wie dies aus der Fig. 5 ersichtlich ist. Der Abschnitt 20 des Wabenkörpers 2 wird mit einem nicht dargestellten Haftmittel, insbesondere einer Haftflüssigkeit, in Kontakt gebracht. Die Haftflüssigkeit ist in einer Walze 4 bereitgestellt. Es erfolgt eine Benetzung des Wabenkörpers von der Stirnseite her in axialer Richtung des Wabenkörpers 2. Die Walze 4 ist so ausgestaltet, daß eine Benetzung mit einem Haftmittel über die gesamte Stirnfläche 13 des Wabenkörpers 2 möglich ist.

Erfolgte eine ausreichende Benetzung des Wabenkörpers 2 mit einer Haftflüssigkeit, so wird der Wabenkörper 2 in das Mantelrohr 1 eingebracht. Die Einbringung des Wabenkörpers 2 erfolgt vorzugsweise mittels eines Stempels 21, durch den eine Kraft in axialer Richtung des Mantelrohres 1 auf den Wabenkörper 2 ausgeübt wird. An dem Mantelrohr 1 greift ein entsprechender Gegenhalter an, der nicht dargestellt ist, und durch den das Mantelrohr 1 gehalten wird.

Fig. 7 zeigt, daß vor einem Einbringen eines Lotes die der Stirnfläche 13 gegenüberliegende Stirnfläche 14 des Wabenkörpers 2 mit einem Haftmittel in Kontakt gebracht wird. Das Haftmittel wird durch eine Walze 4 bereitgestellt.

Nachdem die Stirnfläche 14 mit dem Haftmittel versehen worden ist, wird ein Lotpulver 22 in den Wabenkörper 2 eingebracht. Der Einbringvorgang des Lotes in den Wabenkörper 2 erfolgt derart, daß der Wabenkörper stirnseitig in das Lotpulver eingedrückt wird. Anschließend wird der Wabenkörper mit dem Mantelrohr 1 gewendet und die gegenüberliegende Stirnfläche in das Lotpulver 22 eingedrückt. Das Lotpulver 22 ist in einem Behälter 23 bereitgestellt.

Fig. 10 zeigt eine Auftragstation, durch die ein Haftmittel 26, welches aus einem Haftmittelbehälter 24 mittels einer Auftragwalze 25 auf eine Walze 4 aufgetragen wird.

Die Auftragwalze 25 ist im wesentlichen horizontal ausgebildet. Sie ist drehbar gelagert. Sie ragt teilweise in das Haftmittel 26 hinein. Die Oberfläche der Auftragwalze 25 ist so ausgestaltet, daß diese das Haftmittel 26 aus dem Haftmittelbehälter 24 aufnimmt und auf die in Kontakt mit der Auftragwalze stehenden Walze 4 überträgt. Zum Abstreifen überschüssiger Haftmittelmenge ist eine Abstreifwalze 27 vorgesehen, die an der Walze 4 anliegt.

### Bezugszeichenliste

- 1: Mantelrohr
- 2: Wabenkörper
- 3: Längsachse
- 4: Walze
- 5: Walzenachse
- 6: Kern
- 7: Substrat
- 8: Walze
- 9: Walze
- 10: Endbereich
- 11: Kontur
- 12: Kanal
- 13: Stirnfläche
- 14: Stirnfläche
- 15: Verbindungsbereich
- 16: Außenmantel
- 17: Element
- 18: Innenmantelfläche
- 19: Lotabschnitt
- 19a: erster Abschnitt
- 19b: zweiter Abschnitt
- 20: Abschnitt
- 21: Stempel
- 22: Lotpulver
- 23: Behälter
- 24: Haftmittelbehälter
- 25: Auftragwalze
- 26: Haftmittel
- 27: Abstreifwalze

## Patentansprüche

1. Verfahren zum Beloten einer Anordnung, welches umfaßt:
Ausbilden eines Wabenkörpers (2) durch Stapeln und/oder Wickeln von Blechlagen, von denen zumindest ein Teil strukturierte Blechlagen sind, so daß der Wabenkörper (2) für ein Fluid durchströmbare Kanäle (12) aufweist;
teilweises Einbringen des Wabenkörpers (2) in ein Mantelrohr (1);
stirnseitiges in Kontakt bringen des vorstehenden Abschnittes (20) des Wabenkörpers (2) mit einer ein Haftmittel enthaltenden Walze (4, 8, 9), die um eine Walzenachse (5) drehbar ist;
Ausführen einer relativ Bewegung zwischen dem Wabenkörper (2) und der Walze (4, 8, 9);
Einbringen des Wabenkörpers (2) in das Mantelrohr (1);
Einbringen eines Lotes (22) wenigstens in den Wabenkörper (2).

2. Verfahren nach Anspruch 1, bei dem der Wabenkörper (2) ortsfest positioniert und die Walze (4, 8, 9) bewegt wird.

3. Verfahren nach Anspruch 1, bei dem die Walze (4, 8, 9) ortsfest positioniert und der Wabenkörper (2) bewegt wird.

4. Verfahren nach Anspruch 1, bei dem der Wabenkörper (2) wenigstens einen aus dem Mantelrohr (1) vorstehenden bezüglich einer Längsachse (3) des Wabenkörpers (2) rotationssymmetrisch ausgebildeten Endbereich (10) aufweist, wobei der Wabenkörper (2) um seine Längsachse (3) und die Walze (9), die eine an den Endbereich (10) angepaßte Gestalt aufweist und sich radialeinwärts bis zur Längsachse (3) erstreckt, um eine die Längsachse (3) unter einem Winkel von ca. 90° schneidende Walzenachse (5) verdreht wird.

5. Verfahren nach einem der Ansprüche 1 bis 4, bei dem die Walze (4, 8, 9) lediglich bereichsweise das Haftmittel (26) aufweist.

6. Verfahren nach einem der Ansprüche 1 bis 5, bei dem der Wabenkörper (2) im wesentlichen vertikal angeordnet und die Walze (4, 8, 9) mit einer oberen Stirnfläche des Wabenkörpers (2) in Kontakt gebracht wird.

7. Verfahren nach einem der Ansprüche 1 bis 5, bei dem der Wabenkörper (2) im wesentlichen vertikal angeordnet und die Walze (4, 8, 9) mit einer unteren Stirnfläche des Wabenkörpers (2) in Kontakt gebracht wird.

8. Verfahren nach einem der Ansprüche 1 bis 7, bei dem vor dem Einbringen des Lotes (22) ein dem Abschnitt (20) gegenüberliegender weiterer Abschnitt des Wabenkörpers (2) mit einem Haftmittel in Kontakt gebracht wird.

9. Verfahren nach Anspruch 8, bei dem der Wabenkörper (2) durch das Mantelrohr (1) hindurchgeschoben wird, so daß der weitere Abschnitt aus dem Mantelrohr (1) vorsteht.

10. Verfahren nach einem der Ansprüche 1 bis 9, bei dem während einer der Abschnitte (20) mit dem Haftmittel in Kontakt gebracht wird, der Wabenkörper (2) so in das Mantelrohr (1) eingebracht ist, daß dieser sich über einen wesentlichen Teil seiner-axialen Länge im Mantelrohr (1) befindet.

11. Verfahren nach Anspruch 10, bei dem der Wabenkörper (2) so in das Mantelrohr (1) eingebracht wird, daß dieser wenigstens 1 mm, vorzugsweise 5 mm, aus dem Mantelrohr (1) vorsteht.

12. Verfahren nach einem der Ansprüche 1 bis 11, bei dem in das Mantelrohr (1) ein buchsenförmiges Element (17) eingebracht wird, das einen Außenmantel (16) aufweist, der im wesentlichen zur Anlage an einen Teil der Innenmantelfläche (18) des Mantelrohres (1) kommt, und in das der Wabenkörper (2) angeordnet wird.

13. Verfahren nach Anspruch 12, bei dem das Element (17) mit dem Mantelrohr (1) verbunden wird.

14. Verfahren nach Anspruch 13, bei dem das Element (17) mit dem Mantelrohr (1) stofflich verbunden wird.

15. Verfahren nach Anspruch 13 oder 14, bei dem das Element (17) mit dem Mantelrohr (1) verklebt wird.

16. Verfahren nach einem der Ansprüche 12 bis 15, bei dem wenigstens ein Lotabschnitt (19) ausgebildet wird, der das Mantelrohr (1) und das Element (17) überlappt.

## Claims

1. Method for applying brazing medium to an arrangement which comprises configuration of a honeycomb body (2) by stacking and/or winding sheet metal layers, at least some of which are structured sheet metal layers, so that the honeycomb body (2) has channels (12) which a fluid can flow through;
partial introduction of the honeycomb body (2) into a jacket pipe (1);
bringing the end face of section (20) of the honeycomb body (2) projecting from the jacket pipe (1) into contact with a roller (4, 8, 9) which is rotatable about a roller axle (5), containing an adhesive medium;
implementing a relative movement between the honeycomb body (2) and the roller (4, 8, 9);
introduction of the honeycomb body (2) into the jacket pipe (1);
introduction of a brazing medium (22) at least into the honeycomb body (2).

2. Method according to claim 1, in which the honeycomb body (2) is positioned in a stationary manner, and the roller (4, 8, 9) is moved.

3. Method according to claim 1, in which the roller (4, 8, 9) is positioned in a stationary manner, and the honeycomb body (2) is moved.

4. Method according to claim 1, in which the honeycomb body (2) is provided with at least one end area (10) projecting from the jacket pipe (1), configured rotationally symmetrical with respect to a longitudinal axis (3) of the honeycomb body (2), wherein the honeycomb body (2) is rotated about its longitudinal axis (3) and the roller (9), which has a shape matching the end area (10) and extends radially inwards as far as the longitudinal axis (3), is rotated about a roller axle (5) intersecting the longitudinal axis (3) at an angle of approximately 90°.

5. Method according to one of claims 1 to 4, in which the roller (4, 8, 9) has the adhesive medium (26) only in some areas.

6. Method according to one of claims 1 to 5, in which the honeycomb body (2) is arranged substantially vertically and the roller (4, 8, 9) is brought into contact with an upper end face of the honeycomb body (2).

7. Method according to one of claims 1 to 5, in which the honeycomb body (2) is arranged substantially vertically and the roller (4, 8, 9) is brought into contact with a lower end face of the honeycomb body (2).

8. Method according to one of claims 1 to 7, in which prior to the introduction of the brazing medium (22) a further section of the honeycomb body (2) opposite the section (20) is brought into contact with an adhesive medium.

9. Method according to claim 8, in which the honeycomb body (2) is pushed through the jacket pipe (1) such that the further section projects from the jacket pipe (1).

10. Method according to one of claims 1 to 9, in which while one of the sections (20) is brought into contact with the adhesive medium, the honeycomb body (2) is introduced into the jacket pipe (1) such that it is located, over a substantial part of its axial length, in the jacket pipe (1).

11. Method according to claim 10, in which the honeycomb body (2) is introduced into the jacket pipe (1) such that it projects by at least 1 mm, preferably 5 mm, from the jacket pipe (1).

12. Method according to one of claims 1 to 11, in which a sleeve-shaped element (17) is introduced into the jacket pipe (1), which has an outside jacket (16) which substantially comes into contact with a part of the inside jacket surface (18) of the jacket pipe (1), and in which the honeycomb body (2) is arranged.

13. Method according to claim 12, in which the element (17) is connected to the jacket pipe (1).

14. Method according to claim 13, in which the element (17) is materially connected to the jacket pipe (1).

15. Method according to claim 13 or 14, in which the element (17) is glued to the jacket pipe (1).

16. Method according to one of claims 12 to 15, in which at least one brazing section (19) is configured, which overlaps the jacket pipe (1) and the element (17).

## Revendications

1. Procédé destiné à l'application de brasure sur un assemblage lequel comporte :
Réalisation d'un corps en nids d'abeilles (2) par empilement et/ou par enroulement de couches de tôle, dont au moins une partie sont des couches de tôle structurées, de sorte que le corps en nids d'abeilles (2) présente des canaux (12) pouvant être parcourus par un fluide ;
introduction partielle du corps en nids d'abeilles (2) dans un tube d'enveloppe (1) ;
mise en contact frontale de la section (20) en saillie du corps en nids d'abeilles (2) avec un cylindre (4, 8, 9) comportant un adhésif, lequel cylindre (4, 8, 9) est rotatif autour d'un axe de cylindre (5) ;
exécution d'un mouvement relatif entre le corps en nids d'abeilles (2) et le cylindre (4, 8, 9) ;
introduction du corps en nids d'abeilles (2) dans le tube d'enveloppe (1) ;
introduction d'un matériau de brasure (22) au moins dans le corps en nids d'abeilles (2).

2. Procédé suivant la revendication 1, dans lequel le corps en nids d'abeilles (2) est positionné de manière stationnaire et le cylindre (4, 8, 9) est déplacé.

3. Procédé suivant la revendication 1, dans lequel le cylindre (4, 8, 9) est positionné de manière stationnaire et le corps en nids d'abeilles (2) est déplacé.

4. Procédé suivant la revendication 1, dans lequel le corps en nids d'abeilles (2) présente au moins une zone d'extrémité (10) faisant saillie hors du tube d'enveloppe (1) et étant réalisée rotationnellement symétrique par rapport à un axe longitudinal (3) du corps en nids d'abeilles (2), dans quel cas le corps en nids d'abeilles (2) est contourné autour de son axe longitudinal (3) et le cylindre (9), qui a une configuration adaptée à la zone d'extrémité (10) et qui s'étend radialement vers l'intérieur jusqu'à l'axe longitudinal (3), est contourné autour d'un axe de cylindre (5) qui coupe l'axe longitudinal (3) sous un angle d'environ 90°.

5. Procédé suivant l'une des revendications 1 à 4, dans lequel le cylindre (4, 8, 9) ne présente l'adhésif (26) que par zones.

6. Procédé suivant l'une des revendications 1 à 5, dans lequel le corps en nids d'abeilles (2) est agencé sensiblement de manière verticale et le cylindre (4, 8, 9) est mis en contact avec une face frontale supérieure du corps en nids d'abeilles (2).

7. Procédé suivant l'une des revendications 1 à 5, dans lequel le corps en nids d'abeilles (2) est agencé sensiblement de manière verticale et le cylindre (4, 8, 9) est mis en contact avec une face frontale inférieure du corps en nids d'abeilles (2).

8. Procédé suivant l'une des revendications 1 à 7, dans lequel avant l'introduction du matériau de brasure (22), une autre section du corps en nids d'abeilles (2) en vis-à-vis de la section (20) est mise en contact avec un adhésif.

9. Procédé suivant la revendication 8, dans lequel le corps en nids d'abeilles (2) est déplacé à travers le tube d'enveloppe (1), de sorte que l'autre section fait saillie hors du tube d'enveloppe (1).

10. Procédé suivant l'une des revendications 1 à 9, dans lequel pendant que l'une des sections (20) est mise en contact avec l'adhésif, le corps en nids d'abeilles (2) est introduit de telle façon dans le tube d'enveloppe (1) que sur une partie essentielle de sa longueur axiale celui-ci se trouve dans le tube d'enveloppe (1).

11. Procédé suivant la revendication 10, dans lequel le corps en nids d'abeilles (2) est introduit de telle façon dans le tube d'enveloppe (1) que celui-ci fait saillie d'au moins 1 mm, de préférence de 5 mm hors du tube d'enveloppe (1).

12. Procédé suivant l'une des revendications 1 à 11, dans lequel un élément en forme de manchon (17) est introduit dans le tube d'enveloppe (1), qui a une enveloppe extérieure (16) s'appliquant sensiblement contre une partie de la surface d'enveloppe intérieure (18) du tube d'enveloppe (1) et dans lequel le corps en nids d'abeilles (2) est agencé. relié au

13. Procédé suivant la revendication 12, dans lequel l'élément (17) est relié au tube d'enveloppe (1).

14. Procédé suivant la revendication 13, dans lequel l'élément (17) est relié matériellement au tube d'enveloppe (1).

15. Procédé suivant la revendication 13 ou 14, dans lequel l'élément (17) est collé au tube d'enveloppe (1).

16. Procédé suivant l'une des revendications 12 à 15, dans lequel au moins une section de matériau de brasure (19) est réalisée qui recouvre le tube d'enveloppe (1) et l'élément (17).
